# EUROPÄISCHE PATENTSCHRIFT

(11) **EP 2 021 593 B1**
(45) Veröffentlichungstag und Bekanntmachung des Hinweises auf die Patenterteilung: **20.10.2010**
(21) Anmeldenummer: 07729522.8
(22) Anmeldetag: 25.05.2007
(51) Int. Cl.: F01M 13/04

(54) **EINRICHTUNG ZUR TRENNUNG EINES GAS-FLÜSSIGKEITSGEMISCHES, INSBESONDERE BEI DER ENTLÜFTUNG EINES KURBELGEHÄUSES EINES VERBRENNUNGSMOTORS**
DEVICE FOR SEPARATING A GAS-LIQUID MIXTURE, IN PARTICULAR DURING VENTILATION OF A CRANKCASE OF AN INTERNAL COMBUSTION ENGINE
DISPOSITIF DE SÉPARATION D'UN MÉLANGE GAZ/LIQUIDE, NOTAMMENT LORS DE LA PURGE D'AIR DU CARTER DE VILEBREQUIN D'UN MOTEUR À COMBUSTION INTERNE

(30) Priorität: 29.05.2006 DE 102006024820
(43) Veröffentlichungstag der Anmeldung: 11.02.2009
(73) Patentinhaber: MAHLE International GmbH, 70376 Stuttgart (DE)
(72) Erfinder: RUPPEL, Stefan, 69126 Heidelberg (DE); ÖZKAYA, Yakup, 70806 Kornwestheim (DE)
(74) Vertreter: BRP Renaud & Partner
(86) Internationale Anmeldenummer: PCT/EP2007/055093
(87) Internationale Veröffentlichungsnummer: WO 2007/138008

(56) Entgegenhaltungen:
- DE-A1- 4 037 983
- DE-A1- 10 065 328
- DE-A1-102005 043 198
- JP-A- 9 177 529
- JP-A- 9 303 129
- JP-A- 10 121 938
- JP-A- 11 264 312
- ANONYMOUS: "Synthetic Non-Woven Fabrics (Viledon Air Filter)" INTERNET ARTICLE, [Online] 1. Februar 2006 (2006-02-01), Seiten 1-10, XP002504190 Gefunden im Internet: URL:http://www.vilene.co.jp/en/product/pdf /viledon_air_filter.pdf>
- ANONYMOUS: "Physikalische Grösse" WIKIPEDIA, [Online] 14. Oktober 2008 (2008-10-14), Seiten 1-4, XP002504191 Gefunden im Internet: URL:http://de.wikipedia.org/wiki/Porosit%C 3%A4t> [gefunden am 2008-11-17]

## Beschreibung

Die Erfindung betrifft eine Einrichtung zur Trennung eines Gas-Flüssigkeitsgemisches, insbesondere bei der Entlüftung eines Kurbelgehäuses eines Verbrennungsmotors, nach dem Oberbegriff des Patentanspruchs 1.

Aus EP 1 068 890 B1 ist eine Einrichtung zur Trennung eines Gas-Flüssigkeitsgemisches bekannt, die als ein sogenannter Impactor ausgebildet ist. Dabei handelt es sich um eine Trenneinrichtung, bei der das Gas-Flüssigkeitsgemisch nach einer Beschleunigung in beispielsweise einer Düse auf eine Trennfläche aufprallt, an der eine Strömungsablenkung um mindestens 60 Winkelgrad erfolgt. Trägheitsbedingt werden durch eine solche Strömungsumlenkung Flüssigkeitsanteile aus dem Gemisch abgeschieden. Bei jener bekannten Einrichtung ist die Aufprallfläche insbesondere rau bzw. porig ausgebildet für einen besonders guten Abscheidegrad.

Aus DE 4 037 983 A1 ist zur Trennung eines Gas-Flüssigkeitsgemisches ein Zyklon bekannt, dessen, dem rotierenden Gemischstrom ausgesetzten Innenwandbereiche mit einer relativ dicken Schaumstoff-Auskleidung ausgekleidet sind. Derartige Schaumstoffe besitzen relativ große Poren und beeinträchtigen, das heißt bremsen, die Rotationsströmung daher erheblich. Dies gilt insbesondere für dicke Schaumstoff-Auskleidungen, wie sie dort vorgesehen sind.

Die Erfindung beschäftigt sich mit dem Problem, Einrichtungen zur Trennung eines Gas-Flüssigkeitsgemisches, insbesondere bei der Entlüftung eines Kurbelgehäuses eines Verbrennungsmotors zu schaffen, bei denen bei einer möglichst geringen Baugröße und einem konstruktiv einfachen Aufbau der Trenneinrichtung ein möglichst hoher Abscheidegrad erreicht werden kann.

Gelöst wird dieses Problem in erster Linie durch Trenneinrichtungsausführungen nach den unabhängigen Patentansprüchen 1 und 12. Diese Ausführungen weisen insbesondere Trennflächen auf, die zumindest teilweise rau oder porig ausgebildet sind und zwar in einer Art wie sie beispielsweise unter anderem insbesondere in EP 1 068 890 B1 ausführlich beschrieben sind.

Bei der Ausführung nach dem unabhängigen Anspruch 1 sowie den Ausgestaltungen, auf die hierzu Unteransprüche gerichtet sind, hat sich überraschend herausgestellt, dass eine feinporige, dünnere, insbesondere faserige Trennfläche, wie sie sich bei Impactoren nach beispielsweise EP 1 068 890 B1 als äußerst abscheidewirksam herausgestellt haben, auch bei einer Verwendung in Zyklonen eine Steigerung des Abscheidegrades bewirkt. Überraschend ist dies bei Zyklonen deshalb, weil es für die Abscheidewirkung hier an sich auf eine möglichst hohe Rotations-Strömungsgeschwindigkeit ankommt und diese durch eine raue bzw. poröse Ausbildung der Fläche, wie sie beispielsweise durch einen dicken, relativ großporigen Schaumstoff nach DE 4 037 983 A1 vorliegt, an der die Strömung erfolgt, an sich negativ beeinflusst wird. Erkannt zu haben, dass dies bei dünnen, feinporigen Trennflächen nicht der Fall ist, war nicht zu erwarten und stellt daher eine Erfindung dar.

Vorteilhafte und zweckmäßige Ausführungen der Erfindung sind in der Zeichnung dargestellt und werden nachfolgend zur weiteren Erläuterung der Erfindung noch ausführlich beschrieben.

Es zeigen
- Fig. 1a, b: einen Zyklon in Draufsicht und in einem Längsschnitt,
- Fig. 2: einen Längsschnitt durch eine Zyklon- Impactorausführung in einer ersten Variante,
- Fig. 3: eine Zyklon-Impactorkombination in einer zweiten Variante, in einer Darstellung nach Fig. 2,
- Fig. 4: einen Ausschnitt aus einer von der ersten Variante abgeleiteten dritten Variante in einer Darstellung nach Fig. 2.

### Fig. 1a, b

Eine als Zyklon ausgebildete Einrichtung zur Trennung eines Gas-Flüssigkeits-Gemisches besitzt einen Einlasskanal 1 für das Gemisch, sowie einen Ausgangskanal 2 für abgetrennte Flüssigkeit und einen Ausgangskanal 3 für den von Flüssigkeitsanteilen zumindest teilweise befreiten Gasstrom. Der in den Einlasskanal 1 einströmende Gemischstrom übt innerhalb des Zyklons eine Rotationsströmung an der Innenwand 4 des Zyklones aus. Die Durchströmung des Zyklons ist durch Strömungspfeile angedeutet. Die als Trennfläche für abzuscheidende Flüssigkeit ausgebildete Innenwandfläche 4 des Zyklons ist mit einer Vliesschicht 5 bedeckt. Die Vliesschicht 5 besteht aus Kunststofffasern mit einem Durchmesser von etwa 10 - 60 µm. Die Porosität innerhalb der Vliesschicht 5 beträgt etwa 80 - 98%. Die Dicke der Vliesschicht 5 misst etwa 0,3 bis 1,5 mm (nach EN ISDO 9737-2).

Während in dem gezeichneten Ausführungsbeispiel die gesamte von der Gemischströmung überströmte Innenwandfläche 4 des Zyklons mit einer Vliesschicht 5 ausgekleidet ist, kann es ausreichend und sogar vorteilhaft sein, mit der Vliesschicht 5 entweder lediglich denjenigen Eingangsbereich der Innenwandfläche 4 zu bedecken, in dem sich der Zyklon in seinem Inneren noch nicht konisch verjüngt oder auch nur den konischen Bereich, während der "gerade" Bereich für eine ungebremste Strömung unausgekleidet glatt verbleibt.

Mit einer vorstehend beschriebenen, vollständigen oder auch nur bereichsweisen Auskleidung der Innenwandfläche 4 eines Zyklons durch eine Vliesschicht 5 wird eine erhebliche Abscheidegraderhöhung gegenüber einer insgesamt glatten Zyklon-Innenwandfläche 4 erreicht.

### Fig. 2

Dieses Ausführungsbeispiel betrifft eine Gas-FlüssigkeitsGemisch-Trenneinrichtung, die aus einer Kombination eines Impactors mit einem Zyklon besteht. Dabei können insbesondere die Trennflächen innerhalb des Impactors sowie des Zyklons rau bzw. porig, das heißt insbesondere mit einem dünnen, feinporigen Gestrick oder Vlies bedeckt ausgebildet sein und zwar in Ausführungen, wie sie beispielsweise in EP 1 068 890 B1 ausführlich beschrieben sind. In dem gezeichneten Ausführungsbeispiel wird auf diese Ausbildungsart der Trennflächen im einzelnen nicht eingegangen. Sie sind auch nicht gezeichnet. Wie vorstehend angegeben, sollen die betreffenden Trennflächen jedoch insbesondere in der angegebenen Weise feinporig ausgebildet sein.

Die Trenneinrichtung setzt sich zusammen aus einem Vorabscheider 6 in der Form eines Zyklons sowie eines Nachabscheiders 7 in der Form eines Impactors in einer Art wie er beispielsweise unter anderem in EP 1 068 890 B1 beschrieben ist.

Beide Abscheider 6, 7 befinden sich in einem gemeinsam ausgebildeten Gehäuse, in dem einzelne Gehäuseteile gleichermaßen Funktionsteile für beide Abscheider 6, 7 darstellen.

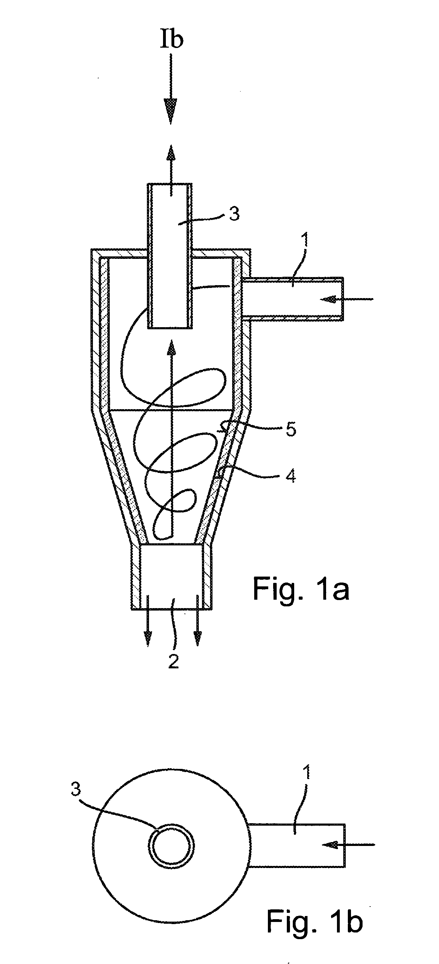

Wie der Zyklon-Abscheider nach Fig. 1 weist der als Zyklon ausgebildete Vorabscheider 6 einen Einlasskanal 1 sowie Ausgangskanäle 2; 3 für einerseits das Gas und andererseits abgeschiedene Flüssigkeitsanteile auf.

Der Gas-Ausgangskanal 3 des Vorabscheiders 6 enthält radial nach außen führende Beschleunigungs-Düsen 8, durch die das aus dem Vorabscheider 6 austretende Gas-Flüssigkeitsgemisch auf eine Impactor-Trennfläche 9 geleitet wird. Durch Strömungsumlenkung wird an der Impactorfläche 9 Flüssigkeit abgeschieden, die durch einen Abflusskanal 10 abfließen kann. Das nach der Flüssigkeitsabtrennung verbleibende Gas verlässt den Nachabscheider 7 durch einen Auslasskanal 11.

Die Durchströmung der Vor-/Nachabscheider-Kombination ist durch Strömungspfeile angedeutet.

Der Abflusskanal 10 für in dem Nachabscheider 7 abgeschiedene Flüssigkeit mündet in den Flüssigkeits-Ausgangskanal 2 des Vorabscheiders 6. In dem Bereich, in den der Abflusskanal 10 in den Flüssigkeits-Ausgangskanal 2 des Vorabscheiders 6 eintritt, ist ein Ventil 12 vorgesehen. Dieses Ventil 12 dient dazu, eine Kurzschlussströmung von dem Vorabscheider 6 durch den Abflusskanal 10 hindurch zu dem Auslasskanal 11 des Nachabscheiders 7 zu verhindern. Die Gefahr einer solchen Kurzschlussströmung ist dadurch gegeben, dass die Abscheiderkombination im Betrieb ein Druckgefälle zwischen dem Einlasskanal 1 und dem Auslasskanal 11 aufweist, das heißt es erfolgt von dem Auslasskanal 11 aus beispielsweise ein Saugdruck.

Das Ventil 12 kann beispielsweise in der schematisch dargestellten Weise als ein Plattenventil ausgebildet sein. Dabei kann die Ausbildung derart sein, dass der als Platte ausgebildete Verschlusskörper 13 des Ventils 12 sofern er lediglich der Schwerkraft unterliegt, eine Offenstellung des Ventiles 12 bewirkt. Zu einem geschlossenen Ventil 12 führt dagegen ein Druckgefälle an gegenüberliegenden Seiten des als Platten ausgebildeten Verschlusskörpers 13 und zwar dann, wenn ein Druckgefälle zu dem Auslasskanal 11 hin über ein vorgebbares Maß hinaus vorliegt. Bei einem geschlossenen Ventil 12 im Betrieb der Trenneinrichtung kann sich abgeschiedene Flüssigkeit vor dem Ventil 12 aufstauen. Bei einer Lage bzw. Anordnung des Flüssigkeitsstauraumes vor dem Ventil 12 derart, dass die aufgestaute Flüssigkeit schwerkraftmäßig auf den Verschlusskörper 13 einwirkt, wird das Ventil 12 öffnen, wenn das Gewicht der aufgestauten Flüssigkeit den druckabhängig eingestellten Schließdruck des Ventiles 12 überschreitet. Wird das Ventil 12 durch aufgestaute Flüssigkeit geöffnet, so kann Flüssigkeit durch das Ventil 12 abfließen, bis das Ventil 12 wegen zu geringen Gewichts aufgestauter Flüssigkeit automatisch durch betriebsbedingt an diesem Ventil anstehenden Unterdruck in Richtung des Auslasskanales 11 wieder schließt.

Der Flüssigkeits-Ausgangskanal 2 besitzt ebenfalls ausgangsseitig ein nicht gezeichnetes Ventil zur Vermeidung einer Gas-Kurzschlussströmung. Dieses Ventil kann beispielsweise in an sich bekannter Weise durch einen Siphon gebildet sein. Im übrigen kann der Flüssigkeits-Ausgangskanal 2 auch direkt in einen Flüssigkeitssumpf geführt werden.

### Fig. 3

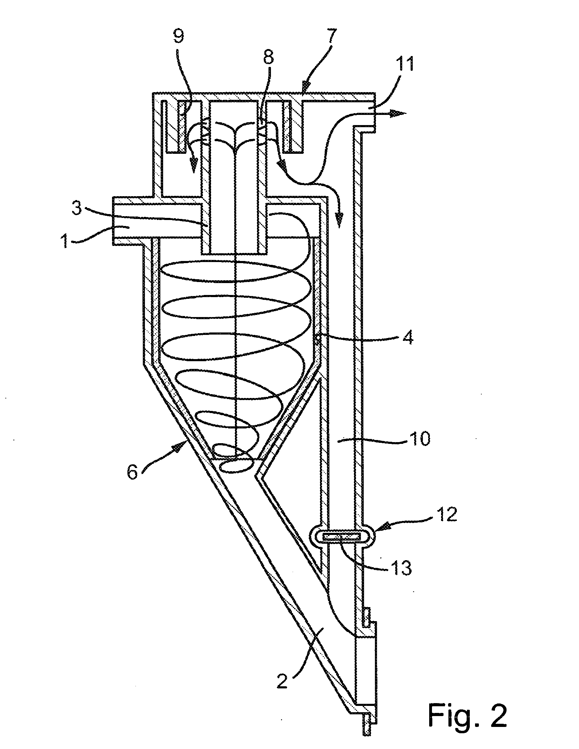

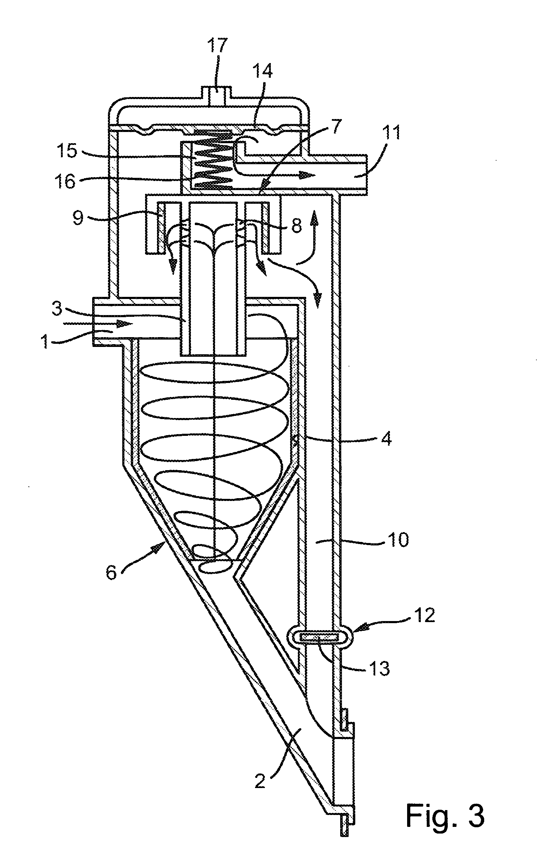

Die Ausführung der Trenneinrichtung nach Fig. 3 entspricht grundsätzlich derjenigen nach Fig. 2. Im Unterschied zu der Ausführung nach Fig. 2 ist bei derjenigen nach Fig. 3 in den Nachabscheider 7 ein Druckregulierventil mit einer Membran 14 integriert. Sofern die Trenneinrichtung nach Fig. 1 Teile und Elemente enthält, die mit denjenigen nach Fig. 2 übereinstimmen, sind diese mit gleichen Bezugszahlen belegt.

Die der Atmosphäre ausgesetzte Membran 14 ist in dem Gehäuse des Nachabscheiders 7 vorgesehen. Diese Membran 14 ist einem gegenüber der Ausführung in Fig. 2 abgewandelten Auslasskanal 11 zugeordnet. Dabei ist dieser Auslasskanal 11 als ein im Längsquerschnitt L-förmiges Rohr ausgebildet mit einem Ausgang 15 am Ende des kleinen L-Steges. Belastet durch eine Druckfeder 16 wird der Ausgang 15 von der Membran 14 unterhalb eines vorgebbaren Druckgefälles zwischen dem Innenraum des Nachabscheiders 7 und der Atmosphäre geöffnet gehalten. Überschreitet ein Unterdruck innerhalb des Nachabscheiders 7 gegenüber Atmosphäre dagegen einen vorgegebenen Grenzwert, so schließt die Membran 14 druckabhängig unter Überwindung der von der Druckfeder 16 aufgebrachten Öffnungskraft.

Die Membran 14 ist innerhalb des Gehäuses des Nachabscheiders 7 geschützt untergebracht, wobei eine Gehäuseöffnung 17 die Verbindung zur Atmosphäre herstellt. Die Kombination des Zyklons als Vorabscheider 6 und des Impactors als Nachabscheidung 7 kann konstruktiv von den gezeigten und beschriebenen Bespielen abweichen, sofern eine Integration beider Abscheider noch in einem Gehäuse verwirklicht ist. Insbesondere kann die Funktion als Vor- und Nachabscheider 6, 7 zwischen dem Zyklon und dem Impactor auch in dem Sinne umgekehrt sein, dass der Impactor als Vorabscheider 6 und der Zyklon als Nachabscheider 7 ausgebildet sind.

### Fig. 4

Bei dieser Ausführung einer Trenneinrichtung liegt eine Abscheiderkombination entsprechend der vorstehend erwähnten Möglichkeit vor, nach der der Impactor als Vor- und der Zyklon als Nachabscheider 6, 7 ausgebildet sind. Diese Ausbildung stellt eine Alternative zu der Ausführung nach Fig. 2 dar. Übereinstimmende Elemente und Teile sind daher mit entsprechenden Bezugszahlen in beiden Fällen versehen.

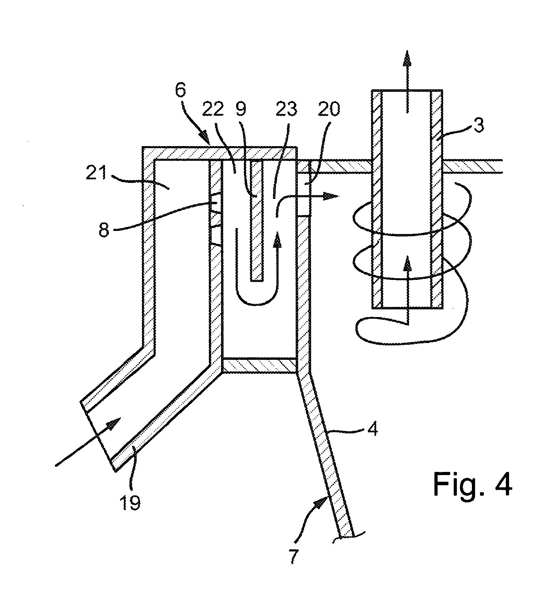

Der Unterschied der Ausführung nach Fig. 4 besteht konstruktiv im wesentlichen darin, dass der Impactor im Eingangsbereich des Zyklons radial außen den Zyklon umgreifend als ein Ringkörper 18 ausgebildet ist. Als Einlass für ein aufzutrennendes Gas-Flüssigkeitsgemisch dient an den als Impactor ausgebildeten Vorabscheider 6 ein Eintrittskanal 19. Von dem Impactor als Vorabscheider 6 ausgehend tritt das vorbehandelte Gasgemisch durch eine Gehäuseöffnung 20 in den Zyklon ein. Zeichnerisch ist lediglich ein Ausschnitt dargestellt, da sämtliche nicht dargestellten Bereiche mit denjenigen der nach der Ausführung in Fig. 2 praktisch übereinstimmen. Wegen einer fehlenden Draufsicht auf diese Ausführungsform sei vorsorglich bemerkt, dass es sich bei den Räumen 21, 22 und 23 des Impactors jeweils um Ringräume handelt.

## Patentansprüche

1. Einrichtung zur Trennung eines Gas-Flüssigkeits-Gemisches, in dem der Flüssigkeitsanteil in Form kleiner Partikel vorliegt, insbesondere bei der Entlüftung eines Kurbelgehäuses eines Verbrennungsmotors, durch Abtrennen und Koagulieren der Flüssigkeitspartikel in einer Trennfläche, bei der
- die Trennfläche zumindest einen Bereich einer Innenwandfläche (4) eines Zyklons umfasst,
- zumindest ein Teilbereich der von dem, um die Zylinderachse rotierenden Gas-Flüssigkeitsgemisch umströmten Innenwandfläche (4) des Zyklons eine Vielzahl kleiner Strömungsschikanen aufweist,
- die Strömungsschikanen von zumindest einer, auf die Innenwandfläche (4) aufgebrachten Auflage (5) gebildet sind,
**dadurch gekennzeichnet,**
- **dass** die mindestens eine Auflage (5) als ein Fasergestrick oder Faservlies mit Faserdicken zwischen 5 und 500 µm sowie mit einer Porosität zwischen 60 und 90% ausgebildet ist,
- **dass** das Fasergestrick beziehungsweise Vlies (5) zweilagig ausgebildet ist mit einer wandnahen und einer wandfernen Schicht, wobei die wandnahe Schicht gegenüber der wandfernen Schicht geringere Porosität aufweist.

2. Einrichtung nach Anspruch 1,
**dadurch gekennzeichnet,**
**dass** die Porosität des Fasergestrickes oder des Faservlieses (5) 80 bis 96% beträgt.

3. Einrichtung nach Anspruch 1 und 2,
**dadurch gekennzeichnet,**
**dass** die Auflagen (5) eine Gesamtdicke zwischen 0,05 - 2 mm besitzen.

4. Einrichtung nach einem der vorhergehenden Ansprüche, **dadurch gekennzeichnet,**
**dass** die Fasern des Fasergestrickes oder Vlieses (5) aus Kunststoff bestehen.

5. Einrichtung nach einem der vorhergehenden Ansprüche, **dadurch gekennzeichnet,**
**dass** das Fasergestrick oder Faservlies (5) im wesentlichen beschränkt ist auf den axialen, durchmesserkonstanten Zykloneingangsbereich.

6. Einrichtung nach einem der Ansprüche 1 bis 4,
**dadurch gekennzeichnet,**
**dass** das Fasergestrick oder Faservlies (5) im wesentlichen beschränkt ist auf den konischen Innenwandbereich des Zyklons.

7. Einrichtung nach einem der vorhergehenden Ansprüche **dadurch gekennzeichnet,**
**dass** die Trennfläche erste und zweite Teiltrennflächen umfasst, von denen eine in dem Zyklon und die zweite in einem Impactor vorliegen, wobei die Teiltrennfläche innerhalb des Impactors in der Form einer Aufprallfläche ausgebildet ist, an der Flüssigkeitsanteile ausschließlich über eine unter, Aufprall erfolgende Strömungsumlenkung von mindestens 60 Winkelgrad nach dem Aufprall aus dem Gasstrom abgeschieden werden.

8. Einrichtung nach Anspruch 7,
**dadurch gekennzeichnet,**
**dass** die beiden Teiltrennflächen in einem Vor- und einem Nachabscheider (6, 7) angeordnet sind.

9. Einrichtung nach Anspruch 8,
**dadurch gekennzeichnet,**
**dass** der Vorabscheider (6) als Zyklon und der Nachabscheider als Impactor (7) ausgebildet sind.

10. Einrichtung nach Anspruch 8,
**dadurch gekennzeichnet,**
**dass** der Impactor als Vorabscheider (6) und der Zyklon als Nachabscheider (7) ausgebildet sind.

11. Einrichtung nach einem der Ansprüche 7 bis 10, **dadurch gekennzeichnet,**
**dass** Vor- und Nachabscheider (6, 7) in einem gemeinsamen Gehäuse unter Verwendung teilweise gleicher Gehäusebereiche
als Funktionselemente beider Abscheider zusammengefasst sind.

12. Einrichtung nach Anspruch 9,
**dadurch gekennzeichnet,**
- **dass** der Nachabscheider (7) in der Form eines Impactors einen Rohrabschnitt zur Aufnahme und Weiterleitung des aufzutrennenden Gas-Flüssigkeitsgemisches umfasst, wobei
- die Weiterleitung zumindest teilweise durch radiale Beschleunigungsdüsen (8) auf eine konzentrisch zu dem Rohrabschnitt angeordnete Aufprallwand als dem Impactor zugeordnete Teiltrennfläche erfolgt,
- der Rohrabschnitt von dem Gasausgangskanal (3) des Zyklons als Vorabscheider (6) ausgebildet ist,
- getrennte Flüssigkeitsausgänge des Vor- und Nachabscheiders (6, 7) zu einem gemeinsamen Ausgang zusammengeführt sind,
- der Flüssigkeitsausgang des Nachabscheiders (7) mit einem Ventil (12) versehen ist, das bei einem ausgangsseitig gegenüber dem Vorabscheider (6) niedrigeren Druck bei Überschreiten eines vorgegebenen Grenzwertes geschlossen ist, während es bei anderen Druckverhältnissen geöffnet ist.

13. Einrichtung nach einem der Ansprüche 7 bis 12, **dadurch gekennzeichnet,**
**dass** der Flüssigkeits-Abflusskanal (10) aus dem Impactor bei dessen Ausbildung als Vor- oder Nachabscheider (6, 7) als ein druckdifferenzgesteuertes beziehungsweise betätigtes Ventil (12) ausgebildet ist, wobei als Druckdifferenz diejenige dient, die zwischen den Flüssigkeitsausgängen (10, 2) der beiden miteinander kombinierten Abscheider (6, 7) herrscht.

14. Einrichtung nach Anspruch 13,
dass das Ventil (12) in geschlossenem Zustand aus dem Impactor abfließende Flüssigkeit aufstaut, wobei das Gewicht dieser Flüssigkeit das Ventil (12) entgegen einer allein von der Gasdruckdifferenz ausgehenden Schließkraft für einen Flüssigkeitsabfluss öffnen kann.

15. Einrichtung nach Anspruch 14,
**dadurch gekennzeichnet,**
**dass** das Ventil (12) als ein Klappenventil ausgebildet ist, dessen als Verschlusskörper (13) wirkende Platte das Ventil (12) unterhalb eines vorgegebenen Druckdifferenzwertes automatisch schließt.

16. Einrichtung nach einem der Ansprüche 7 bis 15, **dadurch gekennzeichnet,**
**dass** in das, die beiden Abscheider (6, 7) umfassende Gehäuse ein membranbetätigtes Druckbegrenzungsventil integriert ist, wobei die Membran (14) der Druckdifferenz zwischen gasseitigem Ausgang des Nachabscheiders (7) und der Atmosphäre ausgesetzt ist.

17. Einrichtung nach einem der Ansprüche 7 bis 16, bei der der Zyklon als Vorabscheider (6) ausgebildet ist,
**dadurch gekennzeichnet,**
**dass** der Gasausgangskanal (3) des Zyklons als Rohrabschnitt für eine Aufnahme und Weiterleitung des in dem Impactor als Nachabscheider (7) aufzutrennenden Gas-Flüssigkeitsgemisches ausgebildet ist.

18. Einrichtung nach einem der Ansprüche 7 bis 16, bei der der Impactor als Vorabscheider (6) ausgebildet ist,
**dadurch gekennzeichnet,**
**dass** der Impactor im Eingangsbereich des Zyklons als Nachabscheider (7) radial außen im Eingangsbereich des Zyklons als den Zyklon in diesem Bereich umfassender Ringkörper (18) ausgebildet ist.

19. Verwendung einer Einrichtung nach einem der Ansprüche 1 bis 18, bei der Entlüftung eines Kurbelgehäuses eines Verbrennungsmotors.

## Claims

1. A device for separating a gas-liquid mixture, wherein the liquid part is in the form of small particles, in particular during ventilation of a crankcase of an internal combustion engine, by separating and coagulating the liquid particles in a separation surface, wherein
- the separation surface comprises at least one region of an inner wall surface (4) of a cyclone,
- at least a portion of the inner wall surface (4) of the cyclone passed by the gas-liquid mixture rotating around the cylinder axis comprises a plurality of narrow flow chicanes,
- the flow chicanes are formed by at least one lining (5) applied to the inner wall (4),
**characterized in**
- **that** the at least one lining (5) is formed as a knitted fibre or a non-woven fibre with fibre thicknesses between 5 and 500 µm and a porosity between 60 and 90 %,
- **that** the knitted fibre or the non-woven fibre (5), respectively, is formed dual-layered with a wall-adjacent and a wall-remote layer, wherein the wall-adjacent layer has a lower porosity compared to the wall-remote layer.

2. The device according to claim 1,
**characterized in**
**that** the porosity of the knitted fibre or the non-woven fibre (5) is 80 to 96 %.

3. The device according to claim 1 and claim 2, **characterized in**
**that** the linings (5) have a total thickness between 0.05 - 2 mm.

4. The device according to any one of the preceding claims,
**characterized in**
**that** the fibres of the knitted fibre or the non-woven fibre (5) consists of plastic.

5. The device according to any one of the preceding claims,
**characterized in**
**that** the knitted fibre or non-woven fibre (5) is substantially limited to the axial, diameter-constant cyclone entrance region.

6. The device according to any one of the claims 1 to 4, **characterized in**
**that** the knitted fibre or non-woven fibre (5) is substantially limited to the conical inner wall region of the cyclone.

7. The device according to any one of the preceding claims,
**characterized in**
**that** the separation surface comprises first and second partial separation surfaces, one of them located in a cyclone and the second one located in an impactor, wherein the partial separation surface within the impactor is in the form of an impact surface at which the liquid parts, exclusively as a result of the redirection of the flow by at least 60 angular degrees caused upon the impact, are separated after the impact from the gas flow.

8. The device according to claim 7,
**characterized in**
**that** the two partial separation surfaces are arranged in a pre- and a post-fractionator (6, 7).

9. The device according to claim 8,
**characterized in**
**that** the pre-fractionator (6) is formed as a cyclone and the post-fractionator is formed as an impactor (7).

10. The device according to claim 8,
**characterized in**
**that** the impactor is formed as a pre-fractionator (6) and the cyclone as a post-fractionator (7).

11. The device according to any one of the claims 7 to 10, **characterized in**
**that** the pre- and post-fractionator (6, 7) are combined in a common housing partially using the same housing regions as functional elements of both separators.

12. The device according to claim 9,
**characterized in**
- **that** the post-fractionator (7) in the form of an impactor comprises a tube section for receiving and transferring of the gas-liquid mixture to be separated, wherein
- the transfer is carried out at least partially through radial acceleration nozzles (8) to an impact wall arranged concentric to the tube section and dedicated to the impactor as a partial separation surface,
- the tube section of the gas discharge channel (3) of the cyclone is formed as a pre-fractionator (6),
- separated liquid outlets of the pre- and post-fractionator (6, 7) are joined to a common outlet,
- the liquid outlet of the post-fractionator (7) is provided with a valve (12), which, at a pressure on the outlet side, which is lower compared to the pre-fractionator (6), is closed when exceeding a specified threshold value, while it is open at other pressure conditions.

13. The device according to any one of the claims 7 to 12, **characterized in**
**that** the liquid discharge channel (10) from the impactor at the formation of the same as pre- or post-fractionator (6, 7) is formed as valve (12), controlled or actuated, respectively, by pressure difference, wherein for this purpose the pressure difference is used which exists between the liquid outlets (10, 2) of the two separators (6, 7) combined with each other.

14. The device according to claim 13,
**characterized in**
**that** the valve (12) in the closed state retains the liquid flowing off from the impactor, wherein for a liquid discharge, the weight of this liquid can open the valve (12) against a closing force caused exclusively by the gas pressure difference.

15. The device according to claim 14,
**characterized in**
**that** the valve (12) is formed as a flap valve, the plate of which functions as a closure body (13) closing the valve (12) automatically below a specified pressure difference value.

16. The device according to any one of the claims 7 to 15, **characterized in**
**that** in the housing comprising the two separators (6, 7), a membrane-actuated pressure control valve is integrated, wherein the membrane (14) is exposed to the pressure difference between the gas-side outlet of the post-fractionator (7) and the atmosphere.

17. The device according to any one of the claims 7 to 16, in which the cyclone is formed as a pre-fractionator (6),
**characterized in**
**that** the gas outlet channel (3) of the cyclone is formed as a tube section for receiving and transferring the gas-liquid mixture to be separated in the impactor as a post-fractionator (7).

18. The device according to any one of the claims 7 to 16, in which the impactor is formed as a pre-fractionator (6),
**characterized in**
**that** the impactor in the entrance region of the cyclone as a post-fractionator (7) is formed as a ring body (18) encompassing radially outside the cyclone in this region.

19. Use of a device according to any one of the claims 1 to 18, for the ventilation of a crankcase of an internal combustion engine.

## Revendications

1. Dispositif de séparation d'un mélange gaz - liquide, dans lequel la partie liquide est présente sous forme de particules, notamment lors de l'aération d'un carter de vilebrequin d'un moteur à combustion interne, par séparation et coagulation des particules de liquide dans une surface de séparation, dans lequel
- la surface de séparation comprend au moins une portion d'une surface de paroi intérieure (4) d'un cyclone,
- au moins une portion partielle de la surface de paroi intérieure (4) baignée par le mélange gaz - liquide en rotation autour de l'axe de cylindre du cyclone présente une pluralité de chicanes d'écoulement,
- les chicanes d'écoulement sont formées par au moins une surface d'appui (5) installée sur la surface de paroi intérieure (4),
**caractérisé en ce que**
- la au moins une surface d'appui (5) est réalisée comme un tricot de fibres ou un voile non tissé avec des épaisseurs de fibres comprises entre 5 et 500 µm ainsi qu'avec une porosité comprise entre 60 et 90%,
- le tricot de fibres, respectivement le voile non tissé (5) est réalisé en deux couches avec une couche proche de la paroi et une couche éloignée de la paroi, dans lequel la couche proche de la paroi présente une porosité moindre par rapport à la couche éloignée de la paroi.

2. Dispositif selon la revendication 1,
**caractérisé en ce que**
la porosité du tricot de fibres ou du voile non tissé (5) s'élève de 80 à 96%.

3. Dispositif selon la revendication 1 et 2, **caractérisé en ce que**
les surfaces d'appui (5) possèdent une épaisseur totale comprise entre 0,05 - 2 mm.

4. Dispositif selon une des revendications précédentes, **caractérisé en ce que**
les fibres du tricot de fibres ou du voile non tissé (5) sont constituées de plastique.

5. Dispositif selon une des revendications précédentes, **caractérisé en ce que**
le tricot de fibres ou le voile non tissé (5)est essentiellement limité à la zone d'entrée de cyclone axiale, à diamètre constant.

6. Dispositif selon une des revendications 1 à 4, **caractérisé en ce que**
le tricot de fibres ou le voile non tissé (5) est essentiellement limité à la zone de paroi intérieure conique du cyclone.

7. Dispositif selon une des revendications précédentes, **caractérisé en ce que**
la surface de séparation comprend une première et une deuxième surfaces de séparation partielle, desquelles une est présente dans le cyclone et la deuxième est présente dans un impacteur, dans lequel la surface de séparation partielle est réalisée à l'intérieur de l'impacteur sous la forme d'une surface d'impact, sur laquelle les parties liquides sont séparées du courant de gaz exclusivement par l'intermédiaire d'une déviation d'écoulement ayant lieu sous impact à un degré angulaire d'au moins 60 après l'impact.

8. Dispositif selon la revendication 7,
**caractérisé en ce que**
les deux surfaces de séparation partielles sont disposées dans un pré-séparateur et un post-séparateur (6, 7).

9. Dispositif selon la revendication 8,
**caractérisé en ce que**
le pré-séparateur (6) est réalisé comme un cyclone et le post-séparateur est réalisé comme un impacteur (7).

10. Dispositif selon la revendication 8,
**caractérisé en ce que**
l'impacteur est réalisé comme un pré-séparateur (6) et le cyclone est réalisé comme un post-séparateur (7).

11. Dispositif selon une des revendications 7 à 10, **caractérisé en ce que**
le pré- et le post-séparateur (6, 7) sont assemblés dans un logement commun en utilisant des régions de logement partiellement identiques comme éléments fonctionnels des deux séparateurs.

12. Dispositif selon la revendication 9,
**caractérisé en ce que**
- le post-séparateur (7) sous la forme d'un impacteur comprend une portion tubulaire pour recevoir et transférer le mélange gaz - liquide à séparer, dans lequel
- le transfert s'effectue au moins partiellement par l'intermédiaire de buses d'accélération (8) radiales sur une surface d'impact disposée concentriquement à la portion tubulaire faisant office de surface de séparation partielle coordonnée à l'impacteur,
- la portion tubulaire est réalisée à partir du canal d'aspiration de gaz (3) du cyclone comme un pré-séparateur (6),
- des sorties de liquide séparées du pré- et du post-séparateur (6, 7) sont réunies en une sortie commune,
- la sortie de liquide du post-séparateur (7) est pourvue d'une soupape (12), qui est fermée en présence d'une pression plus base du côté de la sortie par rapport au pré-séparateur (6) lors du dépassement d'une valeur limite prescrite, alors qu'elle est ouverte en présence d'autre rapports de pression.

13. Dispositif selon une des revendications 7 à 12, **caractérisé en ce que**
le canal de déversement de liquide (10) sortant de l'impacteur est réalisé dans le cadre de sa configuration comme un pré- ou post-séparateur (6, 7) comme une soupape (12) commandée, respectivement actionnée par une différence de pression, dans lequel comme différence de pression sert celle qui prédomine entre les sorties de liquide (10, 2) des deux séparateurs (6, 7) combinés l'un avec l'autre.

14. Dispositif selon la revendication 13, **caractérisé en ce que**
la soupape (12) en l'état fermé accumule le liquide déversé hors de l'impacteur, dans lequel le poids de ce liquide peut ouvrir la soupape (12) en sens contraire à une force de fermeture résultant uniquement de la différence de pression de gaz pour un déversement de liquide.

15. Dispositif selon la revendication 14,
**caractérisé en ce que**
la soupape (12) est réalisée comme une soupape à clapet, dont la plaque agissant comme corps d'obturation (13) ferme automatiquement la soupape (12) en dessous d'une valeur de différence de pression prescrite.

16. Dispositif selon une des revendications 7 à 15, **caractérisé en ce que**
dans le logement comprenant les deux séparateurs (6, 7), une soupape de limitation de pression actionnée par une membrane est intégrée, dans lequel la membrane (14) est exposée à la différence de pression entre la sortie du côté du gaz du post-séparateur (7) et l'atmosphère.

17. Dispositif selon une des revendications 7 à 16, dans lequel le cyclone est réalisé comme un pré-séparateur (6),
**caractérisé en ce que**
le canal d'aspiration de gaz (3) du cyclone est réalisé comme une portion tubulaire pour recevoir et transférer le mélange gaz - liquide à séparer dans l'impacteur faisant office de post-séparateur (7).

18. Dispositif selon une des revendications 7 à 19, dans lequel l'impacteur est réalisé comme un pré-séparateur (6),
**caractérisé en ce que**
l'impacteur dans la zone d'entrée du cyclone en tant que post-séparateur (7) est réalisé radialement à l'extérieur dans la zone d'entrée du cyclone comme un corps annulaire (18) englobant le cyclone dans cette zone.

19. Utilisation d'un dispositif selon une des revendications 1 à 18, dans le cadre de l'aération d'un carter de vilebrequin d'un moteur à combustion interne.
